# EUROPEAN PATENT SPECIFICATION

(11) **EP 1 170 917 B1**
(45) Date of publication and mention of the grant of the patent: **04.10.2006**
(21) Application number: 00114551.5
(22) Date of filing: 06.07.2000
(51) Int. Cl.: H04L 27/26

(54) **Method and device to provide an OFDM up-link using Time-Frequency interleaving**
Verfahren und Vorrichtung zur Bereitstellung einen OFDM in der Aufwärtsrichtung mit Zeit-Frequentez-verschachtelung
Procédé et dispositif pour fournir la liaison montante d'un système OFDM utilisant un entrelacement temps-fréquence

(43) Date of publication of application: 09.01.2002
(73) Proprietor: Sony Deutschland GmbH, 10785 Berlin (DE)
(72) Inventor: Stirling-Gallacher, Richard, Advanced Technology, Hedelfinger Strasse 61, 70327 Stuttgart (DE); Wang, Zhaocheng, Advanced Techn. Center Stuttgart, 70327 Stuttgart (DE); Dölle, Thomas, Advanced Techn. Center Stuttgart, 70327 Stuttgart (DE)
(74) Representative: Rupp, Christian

(56) References cited:
- EP-A- 0 681 190
- WO-A-98/34381
- WO-A-99/53664
- US-A- 5 867 478

## Description

The present invention relates to a transmission structure for a OFDM transmission, to the use of a transmission structure, to an OFDM transceiver as well as to a method for wirelessly transmitting on the basis of an OFDM system.

The technical background of the present invention is the field of orthogonal frequency division multiple x (OFDM) communications links.

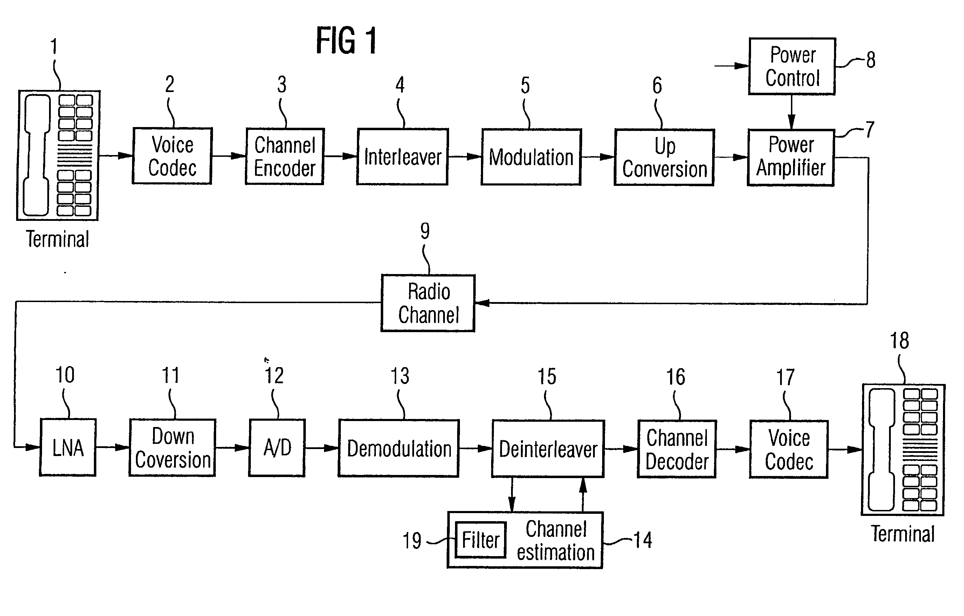

Figure 1 shows schematically an OFDM transmission system. A telephone having the reference sign 1 supplies voice data to a voice codec 2. Note that the terminal can be any other front-end such as a video camera, a personal computer, etc. The data from the voice codec 2 are supplied to a channel encoder 3 to an interleaver 4, to a modulator 5 to an up converter 6 and are finally amplified by a power amplifier 7. The power amplifier 7 has a controllable gain and receives a corresponding power control signal from a power controller 8. This signal amplified by the power amplifier 7 with controlled gain is then wirelessly transmitted over an OFDM radio channel 9. On the receiving side the received signal is amplified by a low noise amplifier 10, processed by a down converter 11, A/D converter 12 and demodulated 13. The demodulator 13 is connected to a channel estimator 14 having filter means 19. The demodulated output signal is deinterleaved 15, channel decoded 16 and then passed to a voice codec 17. Finally, the signal is supplied to a front-end user terminal 18 such as a telephone.

For the up-link all of the user's signals are passed through different channels and, when using an OFDM transmission system, there are special problems relating to power control and channel estimation.

From US 5,867,478 an OFDM wireless communication system is proposed, particularly aiming to reduce the impact of interference in OFDM wireless communication systems. Said OFDM system, called synchronous coherent OFDM (SC-OFDM) proposes to synchronise each of the plurality of SC-OFDM transmitters to a reference where the reference is derived from a common source, for transmitting SC-OFDM signal. The plurality SC-OFDM receivers is arranged to receive the SC-OFDM signals from at least one of the plurality of SC-OFDM transmitters. The SC-OFDM signals each have a cyclic extension, and the SC-OFDM from each SC-OFDM transmitter include at least one pilot code in accordance with a predetermined pilot code scheme. Said system also proposes a scheme for coordinating the transmission of synchronisation signals in a frame by a plurality of base units, wherein a set of four subcarriers are for the transmission of synchronisation signals by a plurality of base units. Thus, a base unit which uses a pilot code transmits synchronisation symbols in the first subcarrier and null symbols in the second, third and fourth subcarriers.

Document WO 98/34381 describes a data transmission method and a radio system comprising at least one base station and a subscriber terminal. In said method each transmitter places reference carriers by an OFDMA (orthogonal frequency division multiple access) modulator in a band in use substantially randomly, whereby a receiver can use the reference carrier signal for synchronisation. Said reference carriers are substantially randomly placed in a band in use by generating random figures, by which a desired amount of possible carriers in the band in use is referred to. Said reference carriers are frequency hopped, whereby the frequencies of the reference carriers are formed according to e.g. a linear congruential formula.

In view of the stated problem and the above cited prior art it is the object of the present invention to provide for a technique allowing for a efficient power control and/or channel estimation particularly in up-link OFDM transmission links.

Said object is achieved by means of the features of the independent claims. The dependent claims develop further the central idea of the present invention.

According to the present invention therefore a transmission structure for an OFDM transmission system is proposed. Thereby frequency/time band blocks with a fixed size of N carriers are used. A number of M band blocks are assigned to a particular user, wherein M is an integer larger than 1 selected depending on the required data rate of a transmission. The frequencies assigned to a particular user are invariant in time.

At least one guard carrier can be provided at either side of a band block.

The frequency/time band blocks used by one particular user can be separated from each other in frequency.

The mapping of data bits to the carriers can be changed for every time-slot of the transmission to provide for a inter-block interleaving.

Pilot bits can be provided in each frequency/time band block, wherein the position of the pilot bits could be varied for each time-slot.

According to a further aspect of the present invention such a transmission structure is used for the up-link of an OFDM transmission structure.

According to a still further aspect of the present invention an OFDM transceiver designed for a transmission structure as set forth above is proposed.

The OFDM transceiver can comprise a demodulator performing a coherent demodulation on the basis of the output of a channel estimator.

The channel estimator comprise a time/frequency filtering unit for filtering channel estimation results which have been calculated before on the basis of pilot bits in each band block.

The parameters of the time/frequency filtering unit thereby can be selected according to the doppler and channel dispersions of the wireless transmission channel.

According to a still further aspect of the present invention a method for wirelessly transmitting data on the basis of an OFDM system is proposed. Thereby frequency/time band blocks with a fixed size of N carriers are provided. A number of M band blocks is assigned to a particular user, wherein M is an integer larger than 1 selected depending on the required data rate of a transmission. The frequencies assigned to a particular user are invariant in time.

The band blocks assigned to a particular user can be interchanged at every time-slot. The mapping of data bits to the carriers can be changed for every time-slot of the transmission to provide for a inter-block-interleaving.

Further aspects, advantages and features of the present invention become evident for the man skilled in the art when reading the following description of embodiments taken in conjunction with the figures of the enclosed drawings.
Figure 1 shows generally an OFDM transmission system,
Figure 2 shows an OFDM frequency/time grid,
Figure 3 shows an allocation of sub-carriers to one user,
Figure 4 shows a further possible allocation of sub-carriers to one user,
Figure 5 shows a still further possible carrier allocation for spaced carrier approach, and
Figure 6 shows a block allocation structure for one user according to the present invention.

A typical radio communication system using an OFDM system has already been explained with reference to figure 1. The present invention particularly addresses a transmission structure for a OFDM system optimized for the up-link (mobile to base station link). For such a link there are some special problems for OFDM systems, namely:
- all transmitted signals (mobile to base station) go through different channels, and
- all received signals at the base station have different frequency offsets and timings.

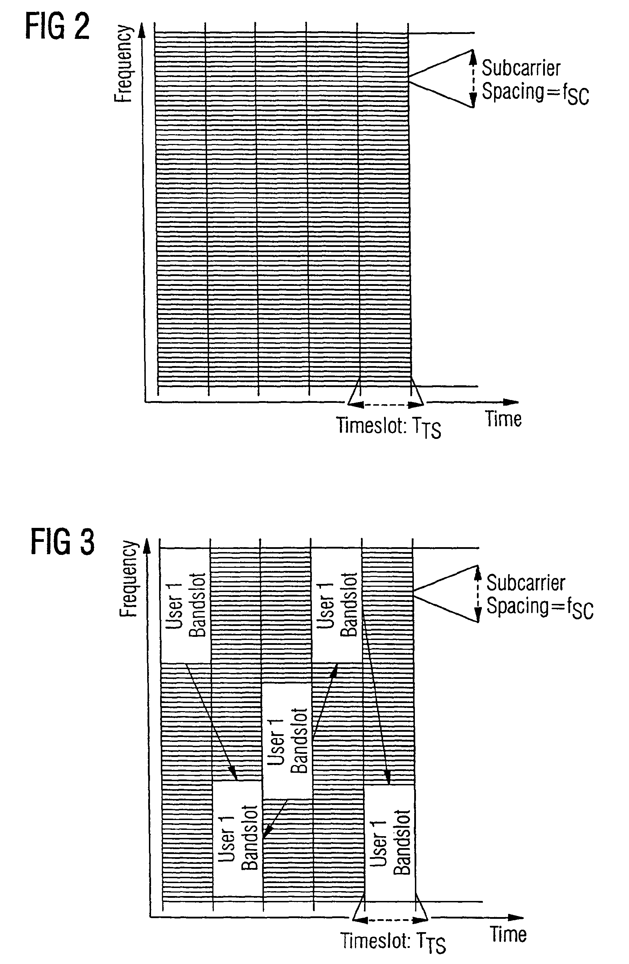

As can be seen from the OFDM frequency/time grid shown in figure 2, an OFDM system essentially consists of a number of orthogonal carriers, which are transmitted in time. The allocation of these carriers to users has an important effect on the performance and properties of a given OFDM system.

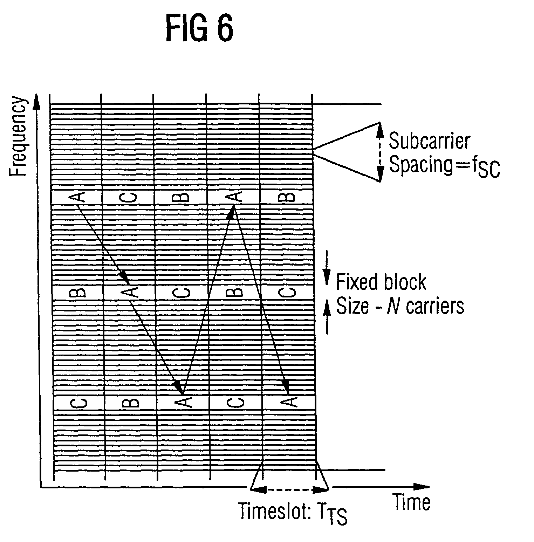

For the up-link a number of different approaches can be used. In the following these approaches will be summarized, the advantages and disadvantages of these approaches will be highlighted and finally the present invention will be explained with reference to figure 6.

Figure 3 shows a band approach. The key features of this approach are:
- Each user is allocated "consecutive frequency carriers" in one band-slot. The number of consecutive carriers is selected depending on the required data rate.
- Each band-slot must frequency hop from one time slot to another to achieve frequency and interference diversity.
- Due the frequency hopping it is difficult to implement coherent modulation and non-coherent modulation is therefore often used.
- Power control can be implemented. Since all of the carriers are consecutive, it is easy to control the power of the bands-slot without creating too many inter-modulation effects.
- A guard or "dummy" carrier is placed at either side of the band to mitigate any adjacent carrier interference due to frequency offsets (carrier frequency or doppler frequency) or differences in power between users.

The key disadvantage of this proposal is the difficulty to implement coherent modulation.

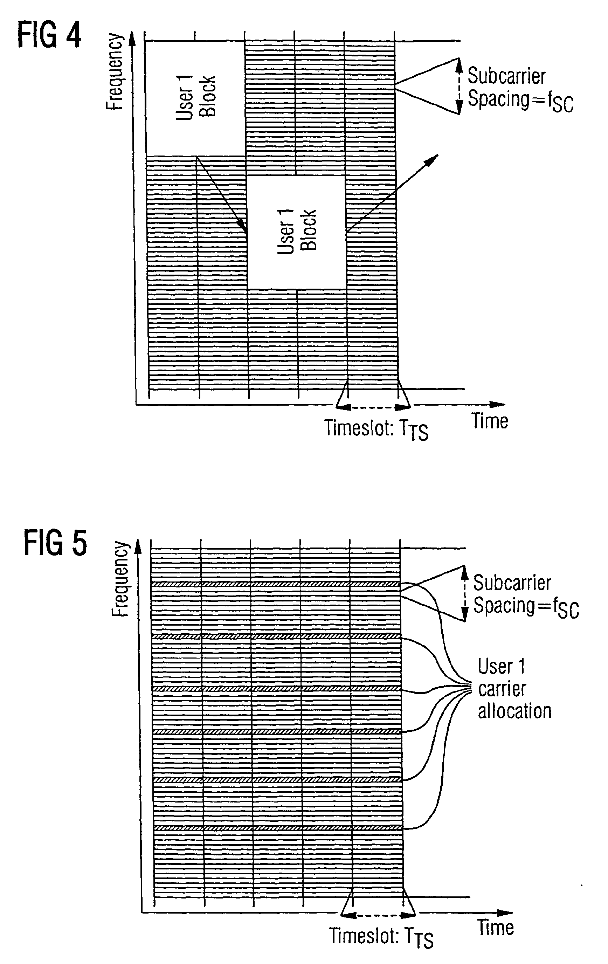

Figure 4 shows a further block structure which is a variation of the band approach shown in figure 3.

The key features of this approach are:
- Each user is allocated a certain number of "consecutive (frequency) carriers" and consecutive time-slots in one band. In this way a two dimensional (frequency/time) block is allocated for each user as shown in figure 4).
- The number of blocks which are assigned to each user are selected depending on the required data rate.
- To obtain frequency and interference diversity the user blocks are "frequency hopped".
- One advantage of this approach in addition to the advantages mentioned in relation to the band approach is that a number of pilots can be inserted within each block and a good coherent channel estimation can be made, thus enabling the use of coherent modulation.
- A guard or "dummy" carrier can be placed at either side of the band to mitigate any adjacent carrier interference due to differences in power, carrier frequency and Doppler frequency between users.

The key disadvantage of this approach is that the optimum size of the block depends upon the Doppler frequency and delay spreads of the channel. For environments which have a large range of Doppler frequencies and channel delay spreads, it is therefore difficult to optimize the block size.

Figure 5 shows a further approach which could be called "spaced carrier up-link approach".

The key features of this space carrier approach" are:
- Each user uses a number of carriers but the carriers are spaced in frequency to obtain to frequency diversity.
- Due to the fact that the same carriers are used in every time-slot, previous pilot tones can be used and a good coherent channel estimation can be made. Therefore, coherent modulation can be used.

However, this approach has the following key disadvantages:
- It is difficult to use power control without a very high overhead of "dummy carriers". The overhead here is much higher than the other approaches, since single carriers are used.
- This approach is sensitive to frequency offsets.

Figure 6 shows a "hybrid approach" according to the present invention. The main features of this approach according to the present invention is:
- A fixed band block size consisting of N frequency carriers is used.
- At least one guard or "dummy" carrier is placed at either side of the band block to mitigate any adjacent carrier interference due to frequency offset or differences in power between users.
- Each user uses a number (M) of band blocks depending on the required data rate (note that in figure 6 M=3).
- The M band blocks used by each user are separated in frequency to obtain frequency diversity, the band slots used by the user always remain on the same frequency. The mapping of data bits to the carriers can be changed for every time-slot of the transmission to provide for an inter-block interleaving. Figure 6 shows an example in which three blocks A, B, C are allocated to a user. The three blocks A, B, C are permuted cyclically for every time slot of the OFDM frequency/time grid.
- The mapping of the data bits to carriers can be changed at every time-slot (inter-block-interleaving) to increase diversity, but the position of the pilot bits within the block can stay in the same place.

The key advantages of this approach according to the present invention are:
- A power control at the base station is possible since band slots containing "consecutive carriers" are used and only a low overhead of dummy carriers is needed.
- Since pilots are provided in every band slot and the band slots are always in the same place it is possible to perform time frequency filtering across the pilot estimates and a good channel estimation can be made (note that this is effected in the channel estimator 14 having a filter means 19). In this way the demodulator 13 can perform a coherent modulation. Note that various pilot patterns can be used.
- The size of the channel estimation filter parameters 19 can be changed for different Doppler and channel delay dispersions and hence coherent modulation can be used for a wide range of different situations. A suitable method to change the size of the filter is described in T. Onizawa, et al, "A simple adaptive channel estimation scheme for OFDM system", IEEE VTC 99, pp. 279-283.

The main advantages of the approach according to the present invention therefore are:
- The ability to use coherent channel estimation (and coherent demodulation) over a wide range of Doppler frequencies and channel delay spreads, and
- the ability to use power control.

## Claims

1. A method for wirelessly transmitting data on the basis of an OFDM system,
the method comprising the step of assigning a number of M band blocks to a particular user,
wherein
- M is an integer, larger than 1, selected depending on the required data rate of a transmission, and
- frequency/time band blocks with a fixed size of N consecutive carriers are used,
- the frequencies assigned to a particular user are invariant in time, **characterized in that**,
- the mapping of data bits to the carriers is changed for every time slot of the transmission to provide for an inter-block interleaving.

2. A method according to claim 1,
**characterized in that**
at least one guard carrier is provided at either side of a band block.

3. A method according to anyone of the preceding claims,
**characterized in that**
the frequency/time band blocks used by one user are separated from each other in frequency.

4. A method according to anyone of the preceding claims,
**characterized in that**
pilot bits are provided in each frequency/time band block, wherein the position of the pilot bits is invariant for each time-slot.

5. Use of a method according to anyone of the preceding claims for the up-link of an OFDM transmission structure.

6. OFDM transceiver,
**characterized in that**
it is designed for transmitting data according to anyone of claims 1 to 4.

7. OFDM transceiver according to claim 6,
**characterized in that**
it comprises a demodulator (13) performing a coherent demodulation on the basis of the output of a channel estimator (14).

8. OFDM transceiver according to claim 7,
**characterized in that**
the channel estimator (14) comprises a time/frequency filtering unit (19) for filtering channel estimation results which where calculated on the basis of pilot bits in each band block.

9. OFDM transceiver according to claim 8,
**characterized in that**
the parameters of the time/frequency filtering unit (19) are selected according to the Doppler and channel delay dispersions of the wireless transmission channel and/or according to different band blocks.

## Patentansprüche

1. Verfahren zum drahtlosen Übertragen von Daten auf der Basis eines OFDM-Systems,
wobei das Verfahren den Verfahrensschritt aufweist, daß einem speziellen Benutzer eine Zahl von M Bandblöcken zugeteilt wird, wobei
- M ganzzahlig und größer als 1 ist und in Abhängigkeit von der geforderten Datenrate einer Übertragung ausgewählt ist,
- Frequenz-/Zeit-Bandblöcke mit einer festen Größe von N aufeinanderfolgenden Trägern benutzt werden und
- die einem speziellen Benutzer zugeteilten Frequenzen zeitlich invariant sind,
**dadurch gekennzeichnet,**
- **daß** die Abbildung der Datenbits auf die Träger für jeden Zeitschlitz der Übertragung variiert wird, um eine Interblockverschachtelung zu erzielen.

2. Verfahren nach Anspruch 1,
**dadurch gekennzeichnet,**
**daß** auf jeder Seite eines Bandblocks wenigstens ein Schutzträger vorgesehen ist.

3. Verfahren nach einem der vorhergehenden Ansprüche,
**dadurch gekennzeichnet,**
**daß** die von einem Benutzer benutzten Frequenz-/Zeit-Bandblöcke frequenzmäßig voneinander getrennt sind.

4. Verfahren nach einem der vorhergehenden Ansprüche,
**dadurch gekennzeichnet,**
**daß** in jedem Frequenz-/Zeit-Bandblock Pilot-Bits vorgesehen sind, wobei die Position der Pilot-Bits für jeden Zeitschlitz invariant ist.

5. Benutzung eines Verfahrens nach einem der vorhergehenden Ansprüche für die Aufwärtsverbindung (Uplink) einer OFDM-Übertragungsstruktur.

6. OFDM-Sendeempfänger,
**dadurch gekennzeichnet,**
**daß** er für die Übertragung von Daten nach einem der Ansprüche 1 bis 4 ausgelegt ist.

7. OFDM-Sendeempfänger nach Anspruch 6,
**dadurch gekennzeichnet,**
**daß** er einen Demodulator (13) aufweist, der eine kohärente Demodulation auf der Basis des Ausgangssignals eines Kanalschätzers (14) durchführt.

8. OFDM-Sendeempfänger nach Anspruch 7,
**dadurch gekennzeichnet,**
**daß** der Kanalschätzer (14) eine Zeit-/Frequenz-Filtereinheit (19) zum Filtern von Kanalschätzergebnissen aufweist, die auf der Basis von Pilot-Bits in jedem Bandblock berechnet wurden.

9. OFDM-Sendeempfänger nach Anspruch 8,
**dadurch gekennzeichnet,**
**daß** die Parameter der Zeit-/Frequenz-Filtereinheit (19) nach Maßgabe der Doppler- und Kanalverzögerungsstreuungen des drahtlosen Übertragungskanals und/oder nach Maßgabe verschiedener Bandblöcke ausgewählt sind.

## Revendications

1. Procédé pour transmettre sans fil des données sur la base d'un système OFDM, le procédé comprenant l'étape d'assignation d'un nombre M de blocs de bande à un utilisateur particulier,
dans lequel :
M est un entier, supérieur à 1, qui est choisi en fonction du débit de données requis d'une transmission ; et
des blocs de bande de fréquences/temps présentant une dimension fixe de N porteuses consécutives sont utilisés,
les fréquences assignées à un utilisateur particulier sont invariantes temporellement,
**caractérisé en ce que** la cartographie de bits de données sur les porteuses est modifiée pour chaque fenêtre temporelle de la transmission afin d'assurer un entrelaçage inter-bloc.

2. Procédé selon la revendication 1, **caractérisé en ce qu'**au moins une porteuse de garde est prévue au niveau de l'un et l'autre côtés d'un bloc de bande.

3. Procédé selon l'une quelconque des revendications précédentes, **caractérisé en ce que** les blocs de bande de fréquences/temps utilisés par un utilisateur sont séparés les uns des autres en termes de fréquence.

4. Procédé selon l'une quelconque des revendications précédentes, **caractérisé en ce que** des bits de pilote sont prévus dans chaque bloc de bande de fréquences/temps, dans lequel la position des bits de pilote est invariante pour chaque fenêtre temporelle.

5. Utilisation d'un procédé selon l'une quelconque des revendications précédentes pour la liaison montante d'une structure de transmission OFDM.

6. Emetteur-récepteur OFDM, **caractérisé en ce qu'**il est conçu pour transmettre des données selon l'une quelconque des revendications 1 à 4.

7. Emetteur-récepteur OFDM selon la revendication 6, **caractérisé en ce qu'**il comprend un démodulateur (13) qui réalise une démodulation cohérente sur la base de la sortie d'un estimateur de canal (14).

8. Emetteur-récepteur OFDM selon la revendication 7, **caractérisé en ce que** l'estimateur de canal (14) comprend une unité de filtrage temps/fréquence (19) pour filtrer des résultats d'estimation de canal qui ont été calculés sur la base de bits de pilote dans chaque bloc de bande.

9. Emetteur-récepteur OFDM selon la revendication 8, **caractérisé en ce que** les paramètres de l'unité de filtrage temps/fréquence (19) sont choisis conformément aux dispersions Doppler et de retard de canal du canal de transmission sans fil et/ou conformément à différents blocs de bande.
